# EUROPEAN PATENT APPLICATION

(11) **EP 0 898 413 A2**
(43) Date of publication of application: **24.02.1999**
(21) Application number: 98306629.1
(22) Date of filing: 19.08.1998
(51) Int. Cl.: H04N 1/38

(54) **Method of eliminating garbage data of a scanner**

(30) Priority: 19.08.1997 KR 3929997
(71) Applicant: Samsung Electronics Co., Ltd., Suwon, Kyungi-do (KR)
(72) Inventor: Kang, Eun-Sook, Kyonggi-do (KR)
(74) Representative: Tunstall, Christopher Stephen

(57) **Abstract**

Lines of a document in which black pixels are detected are counted. If the counted number of lines is larger than a preset reference value, the black pixels are determined as garbage data and the number of the black pixels is calculated. According to the calculated size, the black pixels are changed into white pixels. The black pixels are detected in start and end portions of the respective lines. Accordingly, a document that is smaller than a scanning area can be scanned without any degradation of the scanning efficiency by changing garbage data into white data, which results in enhanced printing quality.

## Description

### BACKGROUND TO THE INVENTION

A scanner is a device that converts data recorded on a document into image data, e.g. bitmap image data. Scanning methods include line scanning for scanning data recorded on the document line-by-line and shuttle scanning for scanning data recorded on the document pixel-by-pixel by back-and-forth motions of a reading unit in the direction perpendicular to the feed direction of the document.

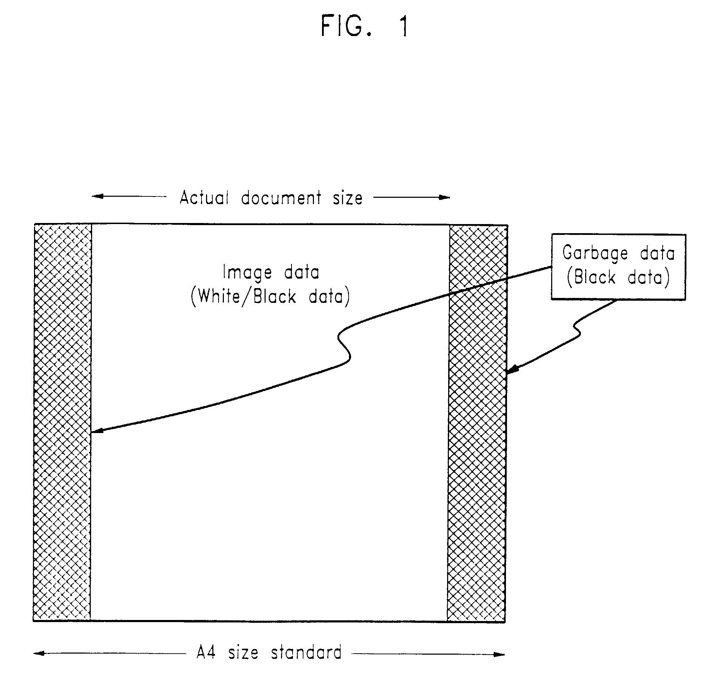

Generally, a scanner employed in a conventional facsimile or a multifunctional machine is standardised at A4 size. When a document that is smaller than A4 is scanned by the A4 size-standardised scanner, garbage data are generated on the left and/or the right of the document as shown in Figure 1. Such a phenomenon also occurs when a document is scanned by a non-standardised scanner when the size of the document is not set in the scanner.

However, since the garbage data are processed as black data in the final printing process, black columns are printed on the left and/or the right of the document in the length direction of the document.

### SUMMARY OF THE INVENTION

Therefore, it is an object of the present invention to deal with this problem.

Accordingly, the present invention provides a method of eliminating unwanted data from scanned document data comprising:
determining the number of lines that include black pixels in a particular position; and
when the number of lines so determined exceeds a preset value, determining that those black pixels are garbage data and converting them to white pixels.

Preferably, converting the garbage pixels to white pixels comprises detecting the extent of the garbage data and converting the black pixels into white pixels only to that extent.

The extent of the garbage data may be determined by sequentially comparing the number of the said black pixels in the present line with a previously determined value and retaining the smaller of the two. Alternatively, the extent of the garbage data may be determined by averaging the number of the said black pixels in a number of lines.

The particular positions may be at the beginning and the end of a line.

The method may include:
storing change element positions representing white to black exchanging positions and black to white exchanging positions of the scanned data in a buffer; and
determining the number of consecutive lines that include the said black pixels.

Preferably, when the number of lines so determined does not exceed the said preset value, the method comprises:
determining that no garbage data exists on the present page; and
processing the scanned data as normal effective data.

### BRIEF DESCRIPTION OF THE DRAWINGS

The present invention will now be described by way of example with reference to the accompanying drawings in which:
FIG. 1 illustrates scanned data of a document that is smaller than the scanning area, in which garbage data are generated;
FIG. 2 is a schematic block diagram of a facsimile of the present invention;
FIGs. 3A and 3B are flow charts of a method for cancelling garbage data according to the present invention;
FIG. 4 is a memory map in which various control variables of Figure 3 are given; and
FIG. 5 illustrates scanned data of a document that is smaller than a scanning area, wherein garbage data are cancelled.

### DETAILED DESCRIPTION OF THE INVENTION

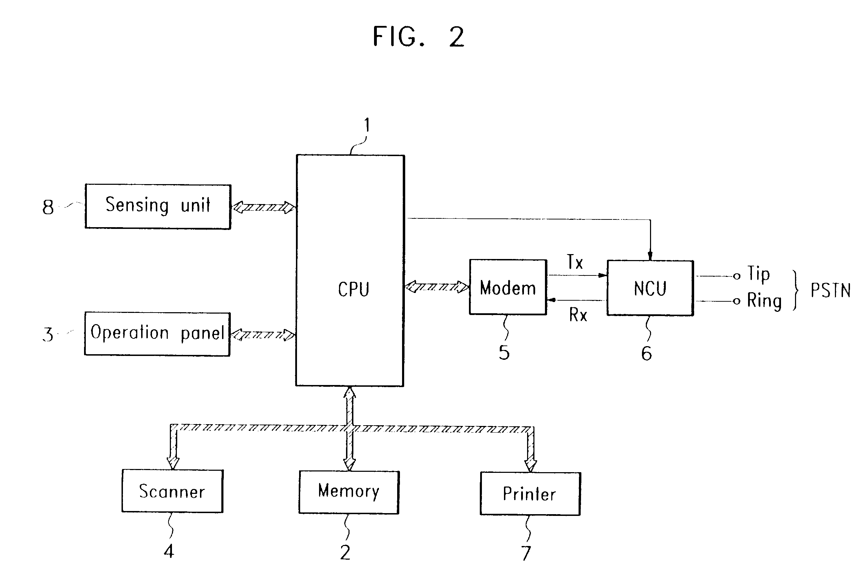

FIG. 2 is a schematic block diagram of a facsimile. Other apparatuses, e.g. a scanner, can be used to achieve the objects of the present invention. As shown in Figure 2, the facsimile includes a central processing unit (CPU) 1 for controlling the operation of the entire facsimile according to a predetermined program and a memory 2 for storing program data, protocol data, character data, work contents related to transmission/reception and so on, and accessing the data under the control of the CPU 1. An operational panel 3 includes a plurality of function keys for generating key data to be input into the CPU 1 and a display device for displaying display data from the CPU 1. A scanner 4 scans data recorded on a document, converts the scanned data into digital image data, and supplies the CPU 1 with the digital image data. A modem 5 modulates output data of the CPU 1 into analogue signals and demodulates the analogue signals into digital signals under the control of the CPU 1. A network control unit (NCU) 6 forms communication loops with a public switching telephone network (PSTN) consisting of rings and tips under the control of the CPU 1 and interfaces signals between the modem 5 and the PSTN. A printer 7 prints received data according to control signals from the CPU 1. A sensing unit 8 senses the amount of record medium or documents and supplies the CPU 1 with the results.

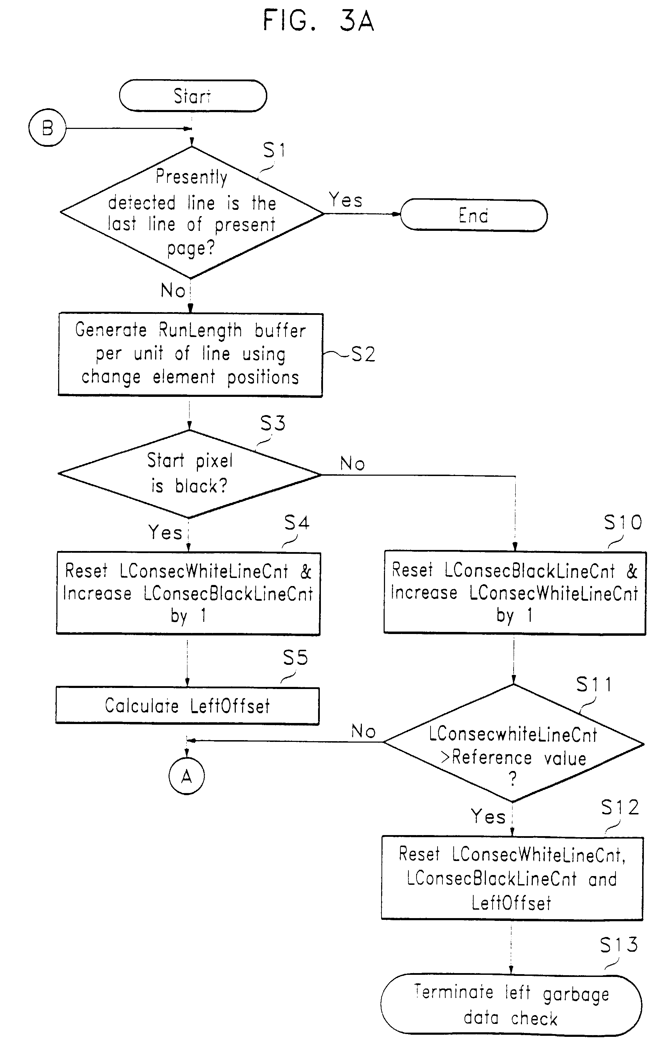

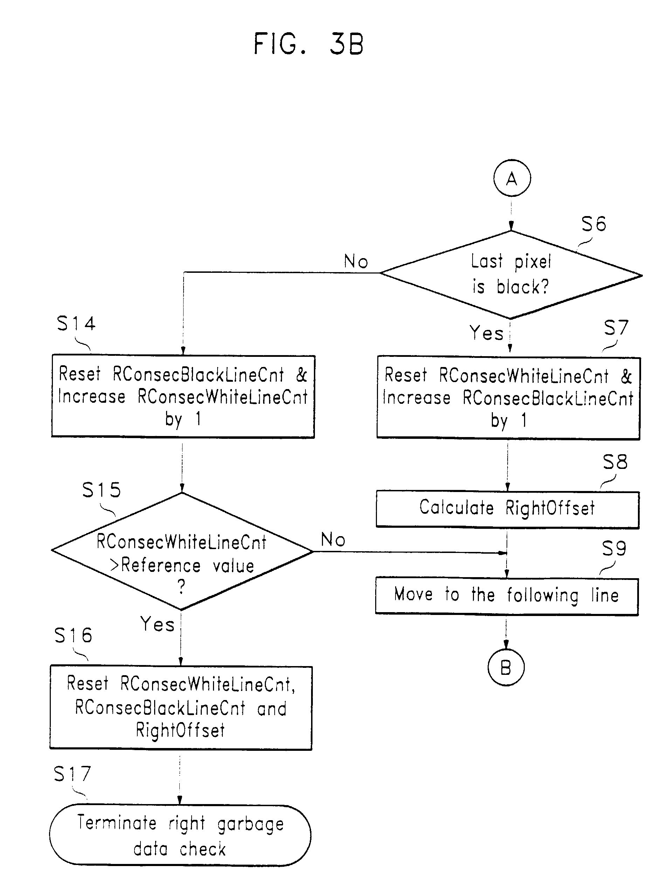

The process for detecting the location of garbage data to be cancelled is illustrated in the flow charts of Figures 3A and 3B. Since the final sizes of garbage data generated on the left and the right of scanned document data which will be referred to as LeftOffset and RightOffset are determined page-by-page, it is firstly determined whether a line to be presently detected is the last line of a present page (S1). If it is determined that the present line is not the last line of the present page, a RunLength buffer for the line of scanned image data (bitmap data and binarized data) of the present page is generated (S2). For example, the first line of an A4 document has 1728 pixels in 200 DPI resolution. The RunLength buffer is a buffer used for processing a line of data. Change element positions, i.e. white to black pixel exchanging positions and black to white pixel exchanging positions, are stored in the RunLength buffer. The RunLength buffer is generated for each line of input data. That is, the change element positions of the respective run lengths are stored in the RunLength buffer in order of white→black→white→black→...

Thereafter, it is determined whether the start pixel is black (S3). In this determining step, information on one pixel is ignored based on the consideration of mechanical allowance or program errors. Accordingly, when StartWhite (the number of first consecutive white pixels) has a value of more than two (2), it is determined that the present line begins with a white pixel. When StartWhite has a value of one (1), this means that the second pixel of the present line is black and the present line is taken to begin with a black pixel. If it is determined that the start pixel of the present line is black, LconsecWhiteLineCnt (the number of consecutive white lines on the left) is reset to zero (0) and LconsecBlackLineCnt (the number of consecutive black lines on the left) is increased by one (1) so as to display that black lines are consecutive (S4). Then, LeftOffset of the present line is calculated (S5).

LeftOffset can be calculated through two methods. According to the first method, the value of StartBlack (the number of first consecutive black pixels) of the first line of the present page is set as LeftOffset. This newly set LeftOffset is compared with previously set LeftOffset. LeftOffset is updated as the smaller value of the two values of LeftOffset. Through this steps, LeftOffset of the present page has the shortest garbage data location value.

According to the second method, an average of maximum and minimum values of StartBlack of the present page is set as LeftOffset. In this case, when the document is skewed, a compensating range is wider than that of the first method.

After LeftOffset is calculated in step S5, it is determined whether garbage data are generated on the right of the scanned data or not (S6). That is, if EndBlack (the number of last consecutive black pixels) does not have a value of zero (0), this means that the last pixel is black. Accordingly, RConsecWhiteLineCnt (the number of consecutive white lines on the right) is reset to zero (0) and RConsecBlackLineCnt (the number of consecutive black lines on the right) is increased by one (1) to display that black lines are consecutive (S7). Then, RightOffset is calculated (S8).

Similar to the methods for calculating LeftOffset, there are two methods for calculating RightOffset. According to the first method, the value of EndBlack (the number of last consecutive black pixels) of the first line of the present page is set as RightOffset. This newly set RightOffset is compared with previously set RightOffset.

RightOffset is updated as the smaller value of the two values of RightOffset. Through this step, RightOffset of the present page has the shortest garbage data location value.

According to the second method, an average of maximum and minimum values of EndBlack of the present page is set as EndOffset. In this case, when the document is skewed, a compensating range is widened than that of the first method.

Step S8 is followed by step S9 of moving to the following line. Then, the steps S1 through S9 with the following line are repeatedly performed until the present page is completed.

On the other hand, if it is determined that StartWhite has a value of more than 2 in step S3, this means that the present line begins with white pixels. Accordingly, LconsecBlackLineCnt is reset to zero (0) (S10). If it is determined that LconsecWhiteLineCnt is larger than a preset reference value (the number of maximum effective lines for discriminating effective data), it is determined that the scanned data of the present line are effective (S11) and LconsecWhiteLineCnt, LconsecBlackLineCnt and LeftOffset are reset to zero (0) (S12). This means that garbage data are not generated on the left of the document. Accordingly, entire steps for cancelling the garbage data if generated on the left of the document are terminated (S13). The other data of the present page are normally processed.

In addition, if it is determined that LconsecWhiteLineCnt is smaller than the reference value in step S11, step S6 is repeated so that the following steps starting from step S6 are carried out again.

On the other hand, if it is determined that the last pixel of the present line is white in step S6, RConsecBlackLineCnt is reset to zero (0) and RconsecWhiteLineCnt is increased by one (1) to thereby check continuous white lines (S14).

Thereafter, if RConsecWhiteLineCnt is larger than the preset reference value in step S15, this means garbage data are not generated on the right of the document. Accordingly, it is determined that the scanned data of the present line are effective and RConsecWhiteLineCnt, RconsecBlackLineCnt and RightOffset are reset to zero (0) (S16). The entire steps performed to cancel the garbage data generated on the right of the document are terminated (S17) and the other data of the present page are normally processed.

If RConsecWhiteLineCnt is smaller than the reference value in step S15, step S9 is repeated so that the following steps starting from step S9 are carried out again.

In this manner, optimal LeftOffset and RightOffset for the present page can be calculated.

The same amount of data as the amount of LeftOffset and RightOffset calculated through the above steps are determined as garbage data. Then, the amount of data determined as garbage data are changed into white data instead of black data, whereby the garbage data can be cancelled.

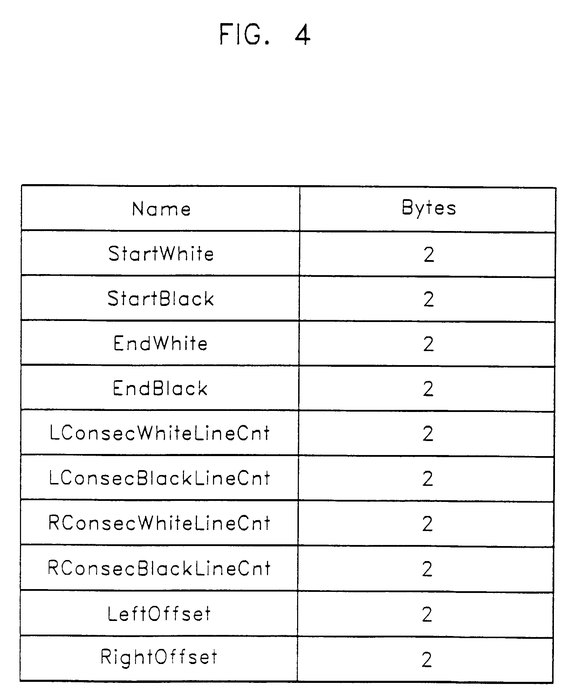

On the other hand, a memory map including control variables required for cancelling the garbage data is shown in Figure 4. Each of the variables is composed of 2 bytes. StartWhite is a variable in which Runlength in StartWhite colour of the present line is stored. StartBlack is a variable in which RunLength in StartBlack colour of the present line is stored. The two variables, i.e., StartWhite and StartBlack are used to check whether garbage data are generated on the left of the document or not.

In addition, EndWhite is a variable memorising RunLength in EndWhite colour of the present line in the case that the present line is finished with white colour and EndBlack is a variable memorising RunLength in EndBlack colour of the present line in the case that the present line is finished with black colour. The two variables, i.e., EndWhite and EndBlack are used to check whether garbage data are generated on the right of the document or not.

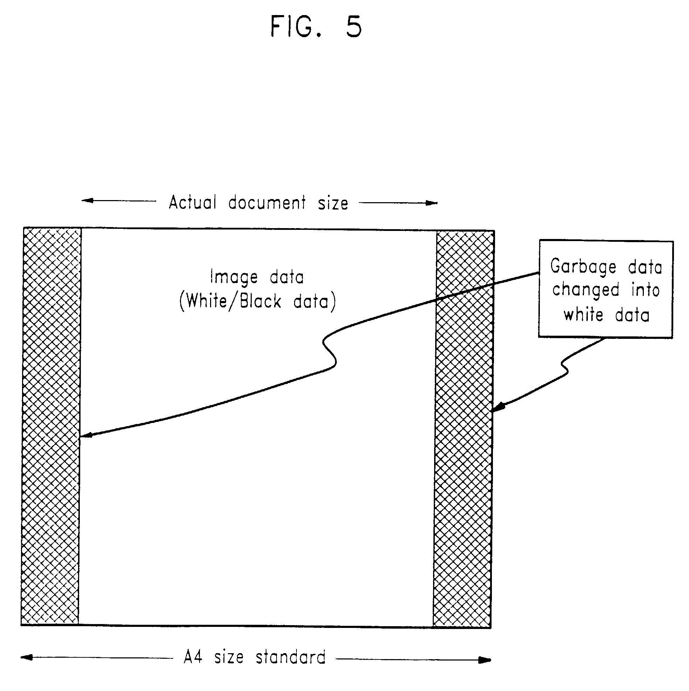

Through the above steps, the image data in which the garbage data are cancelled are illustrated in Figure 5.

The method for cancelling garbage data of a scanner according to the present invention provides advantages as follows. The same scanning efficiency can be obtained regardless of whether the document to be scanned is the same sized as or smaller than the scanning area by changing garbage data generated when the document is smaller than the scanning area into white data. Furthermore, the method for cancelling garbage data according to the present invention provides enhanced printing quality when a document that is smaller than a scanning area of the scanner is scanned.

## Claims

1. A method of eliminating unwanted data from scanned document data comprising:
determining the number of lines that include black pixels in a particular position; and
when the number of lines so determined exceeds a preset value, determining that those black pixels are garbage data and converting them to white pixels.

2. A method according to claim 1 in which converting the garbage pixels to white pixels comprises detecting the extent of the garbage data and converting the black pixels into white pixels only to that extent.

3. A method according to claim 2 in which the extent of the garbage data is determined by sequentially comparing the number of the said black pixels in the present line with a previously determined value and retaining the smaller of the two.

4. A method according to claim 2 in which the extent of the garbage data is determined by averaging the number of the said black pixels a number of lines.

5. A method according to any preceding claim in which the particular positions are at the beginning and the end of a line.

6. A method according to any preceding claim including:
storing change element positions representing white to black exchanging positions and black to white exchanging positions of the scanned data in a buffer; and
determining the number of consecutive lines that include the said black pixels.

7. A method according to any preceding claim 1 in which:
when the number of lines so determined does not exceed the said preset value, determining that no garbage data exists on the present page; and
processing the scanned data as normal effective data.

8. A method of eliminating unwanted data from scanned document data as described herein with reference to FIGs. 2 et seq. of the accompanying drawings.
